# EUROPÄISCHE PATENTANMELDUNG

(11) **EP 2 420 135 A2**
(43) Veröffentlichungstag der Anmeldung: **22.02.2012**
(21) Anmeldenummer: 11006668.5
(22) Anmeldetag: 13.08.2011
(51) Int. Cl.: A01K 55/00, A01K 59/00

(54) **Mobile Handhabungsvorrichtung für Bienenwaben**

(30) Priorität: 17.08.2010 DE 102010034542
(71) Anmelder: Hacker, Josef, 84424 Mittbach (DE)
(72) Erfinder: Hacker, Josef, 84424 Mittbach (DE)

(57) **Zusammenfassung**

Die vorliegende Erfindung betrifft eine mobile Handhabungsvorrichtung (1) für Honigwaben, ein Gestell zur Aufnahme einer solchen mobilen Handhabungsvorrichtung sowie einen Einsatz für eine Honigschleuder zur Aufnahme einer solchen mobilen Handhabungsvorrichtung, die die Bearbeitungs- und Transporttätigkeiten vereinfacht und erleichtert, welche zur Honiggewinnung notwendig sind. Damit können mit einer preisgünstigen, auch nur in einer Richtung angetriebenen Honigschleuder, beide Seiten der Waben ohne deren Herausnahme und Wenden ausgeschleudert werden.

## Beschreibung

Die vorliegende Erfindung betrifft eine mobile Handhabungsvorrichtung für Honigwaben, ein Gestell zur Aufnahme einer solchen mobilen Handhabungsvorrichtung sowie einen Einsatz für eine Honigschleuder zur Aufnahme einer solchen mobilen Handhabungsvorrichtung .

Aus OE 298 23 214U1 und OE 20 2009 007 429U1 sind Handhabungsvorrichtungen für Honigwaben bekannt, die Halterungen für Honigwaben und Honigauffangwannen aufweisen

Die OE 22 63 943B2 beschreibt eine mobile Handhabungsvorrichtung für Honigwaben, bei der die Wabentasche aus einem in sich geschlossenen Stahldrahtgestell besteht. Es handelt sich um ein Drahtgestell zur Aufnahme einer Honigwabe, das mittels angebrachter Haken und Bohrungen von Tragscheiben, die starr mit der Antriebswelle einer Honigschleuder verbunden sind, eingehängt werden kann. Nachteilig bei dieser bekannten Handhabungsvorrichtung ist. dass sie einzig und allein dem Zweck dient, die Honigwaben in einer Honigschleuder zu halten; außerdem ermöglicht sie durch das starre Drahtgestell nicht die Aufnahme größerer, über sie hinausragende Honigwaben.

Aus der OE 1 206 197 A ist eine selbstwendende Honigschleuder bekannt, bei der die Wabentaschen durch geschlossene Wabenrahmen gebildet werden, die an den Stirnseiten mit Gittern versehen sind. Der Wendemechanismus wird durch einen kurbelartigen Hebel gebildet.

Die 00 14140 A beschreibt eine Honigschleuder mit selbsttätig wendenden Wabenhaltern, bei der die Wabenhalter an der Innenseite des Schleuderkorbs über Scharniere nach beiden Seiten hin schwenkbar gelagert sind. Die Wabenhalter sind als flache, hochkant stehende Behälter ausgebildet, deren Seitenwände aus Stahlgitter bestehen, wobei eine der beiden Seiten aufklappbar angeordnet ist.

Aus der OE 933 716 B ist eine Wabenaufnahmetasche bekannt, bei der die beiden Seitenflächen der Tasche zur Aufnahme unterschiedlich dicker Waben gelenkig miteinander verbunden sind, wobei eine Seite aufklappbar gestaltet ist.

Aus der OE 920 631 A ist eine Wendehonigschleuder bekannt, bei der der Wendemechanismus durch einen Wendestab und ein Wendeseil, das über Umlenkrollen geführt wird, gebildet wird Die Wabentaschen sind mit einem seitlich abklappbaren Deckel versehen.

Die OE 937 739 A beschreibt eine Wabentasche, bei der sich der Abstand der Seitenwände über eine Scherenverbindung verstellen lässt.

Aufgabe war folglich, eine mobile Handhabungsvorrichtung zu schaffen, die die Bearbeitungs- und Transporttätigkeiten vereinfacht und erleichtert, welche zur Honiggewinnung notwendig sind.

Gelöst wird diese Aufgabe durch die mobile Handhabungsvorrichtung nach Patentanspruch 1.

Die am zentralen Bügelelement schwenkbar angeordneten Bügelelemente ermöglichen in Verbindung mit den Stützelementen und den Griffbereichen ein spielfreies Halten unterschiedlich großer Honigwaben-Rahmen beim Transport und in der Schleuder.

Ferner ermöglichen die zwei am zentralen Bügelelement schwenkbar angeordneten Halterrahmen den wahlweisen ungehinderten Zugang zu beiden Seiten der Honigwabe, z.B. zum Zwecke des 'Abdeckeins' der Wachsschicht.

Die an der Handhabungsvorrichtung vorhandenen Stifte ermöglichen deren einfaches und sicheres Einsetzen in ein entsprechendes Gestell bzw. in einen entsprechenden Einsatz für eine Honigschleuder.

In den Patentansprüchen 2 bis 6 sind vorteilhafte Weiterbildungen der erfindungsmäßigen Handhabungsvorrichtung gekennzeichnet.

Die Erfindung betrifft auch ein Gestell zur Aufnahme der erfindungsmäßigen Handhabungsvorrichtung (Patentanspruch 7).

Die Bohrungen zur Aufnahme der Stifte der Handhabungsvorrichtungen ermöglichen deren sicheres Halten am Gestell zur Durchführung von Arbeiten an der Honigwabe, insbesondere zum 'Abdeckeln', also zum Entfernen der Wachsschicht.

Vorteilhafte Weiterbildungen des erfindungsmäßigen Gestelles sind in den Patentansprüchen 8 bis 14 gekennzeichnet.

Die Erfindung betrifft schließlich auch den Einsatz für eine Honigschleuder zur Aufnahme der erfindungsmäßigen mobilen Handhabungsvorrichtung (Patentanspruch 15).

Die Bohrungen zur Aufnahme der Stifte ermöglichen das einfache Einfädeln und Fixieren der Handhabungsvorrichtung.

Vorteilhafte Weiterbildungen des erfindungsgemäßen Einsatzes in den Patentansprüchen 16 bis 22 gekennzeichnet.

Besonders vorteilhaft sind dabei die Anschläge gemäß Patentanspruch 16, die ein begrenztes Verschwenken der eingesetzten Handhabungsgeräte in eine tangential zur Schleudertrommel gerichtete Position, sowohl in Drehrichtung der Honigschleuder als auch entgegen deren Drehrichtung, zulassen.

Damit können mit einer preisgünstigen, auch nur in einer Richtung angetriebenen Honigschleuder, beide Seiten der Waben ohne deren Herausnahme und Wenden ausgeschleudert werden.

Ausführungsbeispiele der Erfindung werden im Folgenden anhand der Zeichnungen näher erläutert.

Dabei zeigt:
- Figur 1:: eine in ein erfindungsgemäßes Gestell eingesetzte erfindungsgemäße Handhabungsvorrichtung in geschlossenem Zustand;
- Figur 2:: eine in ein erfindungsgemäßes Gestell eingesetzte erfindungsgemäße Handhabungsvorrichtung in geöffnetem Zustand;
- Figur 3:: einen erfindungsgemäßen Einsatz für eine Honigschleuder
- Figur 4:: ein vergrößertes Detail des in Figur 3 gezeigten Einsatzes.

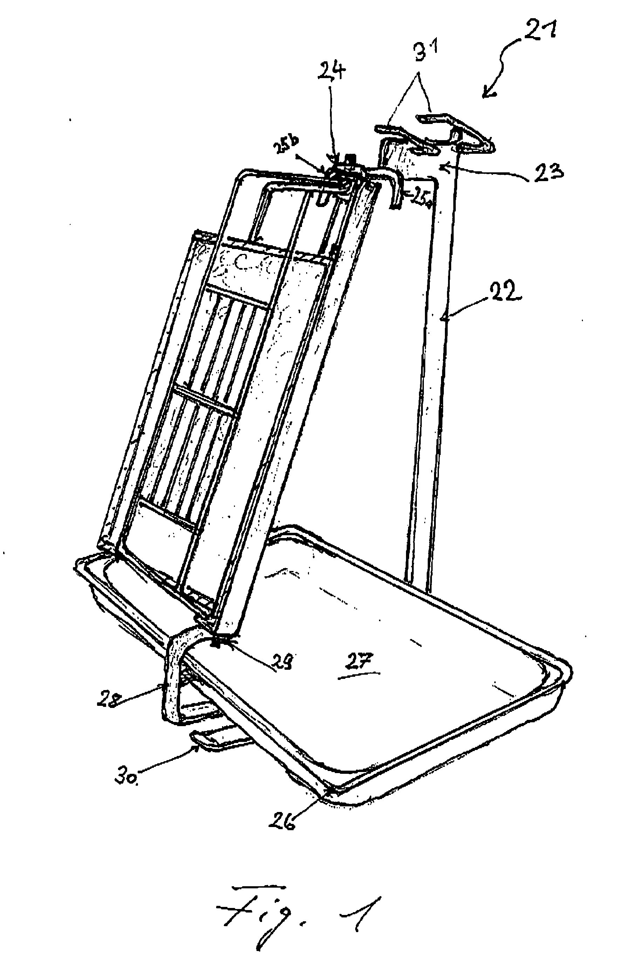

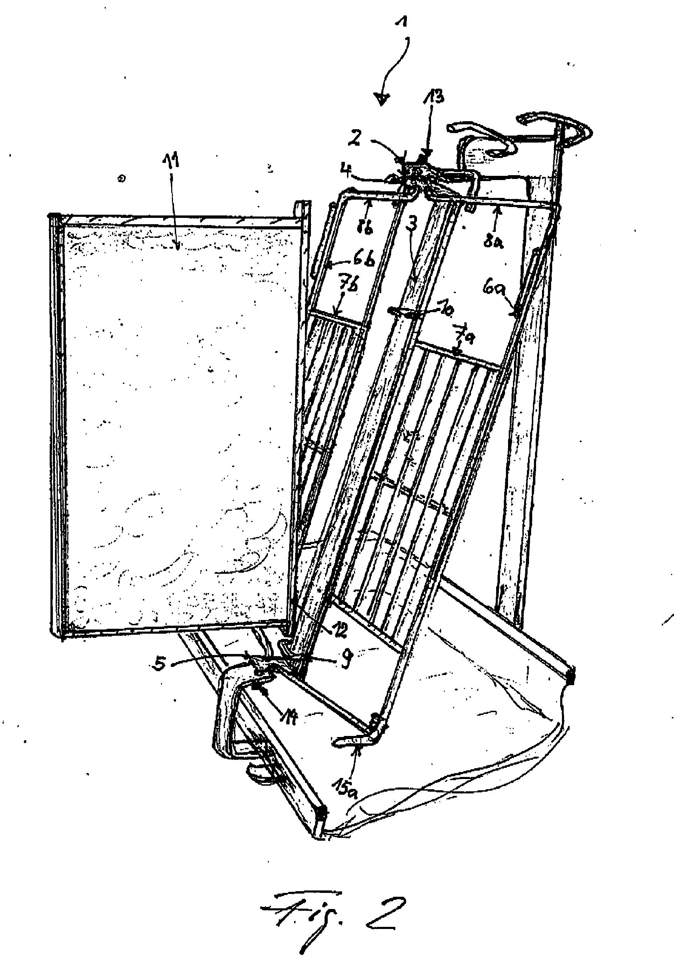

In den Figuren 1 und 2 ist die in das Gestell 21 eingesetzte Handhabungsvorrichtung 1 dargestellt.

Dabei wird die Handhabungsvorrichtung mittels der beiden Stifte 13/14, die von den beidends des langen Abschnittes 3 des zentralen Bügelelements 2 im wesentlichen senkrecht angeordneten kurzen Abschnitten 4/5 nach außen weg weisen, in Bohrungen des Gestells 21 gehalten.

Das Gestell 21 besteht aus dem senkrechten Teil 22 mit einem oberen vorkragenden Arm 23, der wiederum einen Abschnitt 24 mit einer Bohrung zur Aufnahme des oberen Stiftes 13 der mobilen Handhabungsvorrichtung aufweist.

Ferner ist am senkrechten Teil 22 ein unterer Rahmen 26 angeordnet, mit dem ein Bügel 28 verbunden ist, der einen Abschnitt 29 mit der Bohrung zur Aufnahme des unteren Stiftes der Handhabungsvorrichtung aufweist.

Der Rahmen 26 ist zudem noch mit einer Wanne 27 zum Auffangen von Honigtropfen oder Deckelwachs versehen.

Haltebügel 30/31 können bereits bearbeitete oder zur Bearbeitung anstehende Handhabungsvorrichtungen aufnehmen.

Am zentralen Bügelelement 2 der Handhabungsvorrichtung sind zwei Halterahmen 6a/6b flügelartig schwenkbar angeordnet. Figur 1 zeigt die Halterahmen in geschlossenem Zustand, mit einer dazwischen eingeklemmten Honigwabe. Figur 2 zeigt die Halterahmen in geöffnetem Zustand.

Einzelheiten der Halterahmen erkennt man in Figur 2.

Mittig bezüglich der aufzunehmenden Honigwabe 11 sind Stützelemente 7a/7b vorgesehen.

An einer Seite der Halterahmen gibt es korrespondierende Griffbereiche 8a/8b, die man gleichzeitig mit einer Hand erfassen kann.

Auf der unteren Seite der Halterahmen sind Elemente 15a/15b (15b ist durch die Honigwabe 11 verdeckt) angebracht, die in der geschlossenen oder einseitig geöffneten Stellung der Halterahmen den Honigwaben-Rahmen abstützen.

Der lange Abschnitt 3 des zentralen Bügelelements 2 ist mit einer Fixiereinrichtung 9/10 zur Aufnahme des Honigwaben-Rahmens ausgestattet.

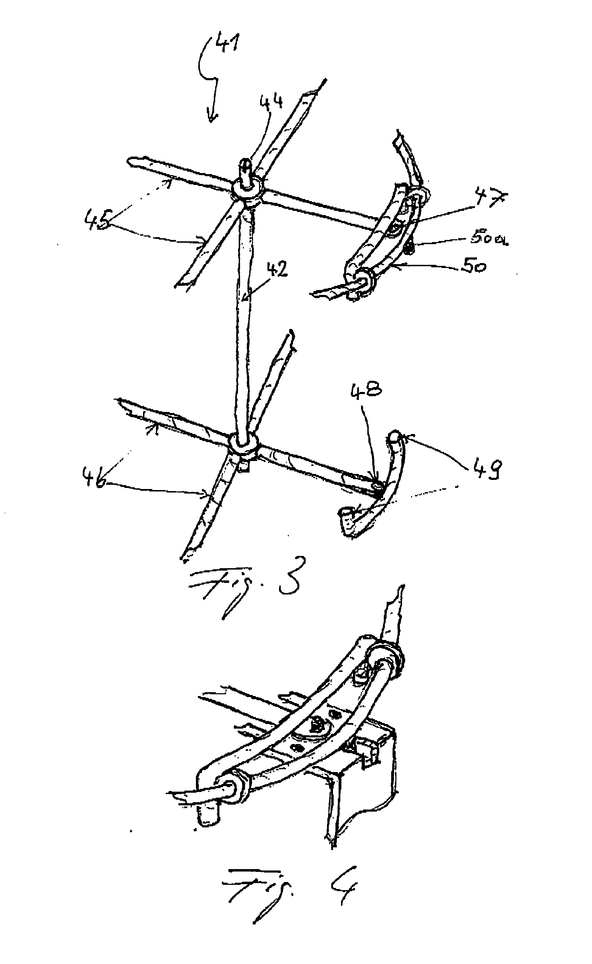

Figur 3 zeigt einen Einsatz für eine Honigschleuder. Dieser besteht aus der Zentralwelle 42 mit einem Endstück 44 zur Aufnahme in ein Lager am Boden der Honigschleuder und einer Kupplung zur Verbindung mit dem Antrieb der Honigschleuder. Mit der Zentralwelle sind drehfest radiale obere und untere Arme 45/46 verbunden, die in ihrem radial außen liegenden Bereich Bohrungen 47/48 zur Aufnahme der oberen und unteren Stifte 13/14 der Handhabungsvorrichtung aufweisen.

Die Anschläge 49 ermöglichen ein begrenztes Verschwenken der eingesetzten Handhabungsvorrichtung 1 in eine etwa tangential zur Schleudertrommel gerichtete Position, sowohl in Drehrichtung der Schleuder als auch entgegen deren Drehrichtung.

Durch eine ringförmige Verstelleinrichtung 50750a (in Figur 4 vergrößert dargestellt) können alle (bei dem dargestellten Ausführungsbeispiel bis zu vier) eingesetzten Handhabungsvorrichtungen gemeinsam in Drehrichtung der Honigschleuder oder entgegen der Drehrichtung verstellt werden.

## Patentansprüche

1. Mobile Handhabungsvorrichtung (1) für Honigwaben mit einem zentralen Bügelelement (2), bestehend aus einem langen Abschnitt (3) und beidends im wesentlichen senkrecht dazu angeordneten kurzen Abschnitten (4, 5),
- zwei am zentralen Bügelelement (2) flügelartig schwenkbar angeordneten Halterahmen (6a, 6b), die in etwa mittig bezüglich der aufzunehmenden Honigwabe (11) angeordnete Stützelemente (7a, 7b), sowie an einer Seite korrespondierende Griffbereiche (8a, 8b) aufweisen,
- einer Fixiereinrichtung (9, 10) zur zweiseitigen Aufnahme des Honigwaben-Rahmens (12),
- zwei an den beiden kurzen Abschnitten (4, 5) angeordnete, von der Handhabungsvorichtung weg gerichteten Stiften (13, 14) zur Verbindung der Handhabungsvorrichtung mit einer Honigschleuder oder einem Gestell.

2. Handhabungsvorrichtung nach Anspruch 1, **dadurch gekennzeichnet, dass** die Fixiereinrichtung (9, 10) zur Aufnahme unterschiedlich großer Rahmen ausgebildet ist.

3. Handhabungsvorrichtung nach Anspruch 1 oder 2, **dadurch gekennzeichnet, dass** die Fixiereinrichtung (9,10) an einer Seite (9) ring- oder hakenförmig zur Aufnahme eines vorstehenden Teils des Honigwaben-Rahmens (12) ausgebildet ist.

4. Handhabungsvorrichtung nach einem der Ansprüche 1 bis 3, **dadurch gekennzeichnet, dass** die Fixiereinrichtung (9, 10) an einer Seite (10) vom langen Abschnitt des zentralen Bügelelements (2) abstehende Elemente aufweist, die den Honigwabenrahmen (12) seitlich abstützen.

5. Handhabungsvorrichtung nach einem der Ansprüche 1 bis 4, **dadurch gekennzeichnet, dass** die schwenkbar angeordneten Halterahmen (6a, 6b) vorstehende Elemente (15a, 15b) aufweisen, die in der geschlossenen Stellung der Halterahmen (6a, 6b), in der diese am Honigwaben-Rahmen anliegen, den Honigwaben-Rahmen (12) an der Unterseite unterstützen.

6. Handhabungsvorrichtung nach einem der Ansprüche 1 bis 5, **dadurch gekennzeichnet, dass** eine Einrastvorrichtung angeordnet ist, weiche die schwenkbar angeordneten Halterahmen (6a, 6b) in der geschlossenen Stellung, In der sie am Honigwaben-Rahmen (12) anliegen, hält.

7. Gestell (21) zur Aufnahme der mobilen Handhabungsvorrichtung (1) für Honigwaben nach einem der Ansprüche 1 bis 6, insbesondere zum Entdeckeln der Honigwabe, mit
- einem senkrechten Teil (22), von dem ein Arm (23) vorkragt, der einen Abschnitt (24) mit einer Bohrung zur Aufnahme des oberen Stiftes (13) der Handhabungs-vorrichtung aufweist,
- einem Rahmen (26) und einem damit verbundenen Bügel (28), der einen Abschnitt (29) mit einer Bohrung zur Aufnahme des unteren Stiftes (14) aufweist,
- Anschlägen (25a, 25b), an denen die schwenkbar angeordneten Halterahmen (6a, 6b) in der geöffneten Stellung anliegen.

8. Gestell nach Anspruch 7, **dadurch gekennzeichnet, dass** der Rahmen (26) zur Aufnahme einer Wanne zum Auffangen von Honigtropfen und Deckelwachs ausgebildet ist.

9. Gestell nach Anspruch 7 oder 8, **dadurch gekennzeichnet, dass** der Abstand zwischen den die Bohrungen tragenden Abschnitten (24, 29) sowie die Länge der Stifte (13, 14) so abgestimmt sind, dass zur Festlegung der Handhabungs-vorrichtung (1) im Gestell zuerst der obere, länger ausgebildete Stift (13) und danach der untere, kürzer ausgebildete Stift (14) in die jeweilige Bohrung eingefädelt werden können.

10. Gestell nach einem der Ansprüche 7 bis 9, **dadurch gekennzeichnet, dass** mindestens ein Haltebügel (30) zur hängenden Aufnahme bereits bearbeiteter oder zur Bearbeitung anstehender weiterer mobiler Handhabungsvorrichtungen (1) angeordnet ist.

11. Gestell nach einem der Ansprüche 7 bis 10, **dadurch gekennzeichnet, dass** es eine Ablage zur Aufnahme einer flachliegenden Honigwabe aufweist, wobei die Ablage beidseitig mit Anschlägen für die Honigwabe versehen ist und wobei diese Anschläge nach oben hin etwa bündig mit dem Honigwaben-Rahmen abschliessen und so eine Führung für einen Schaber bilden.

12. Einsatz (41) für eine Honigschleuder zur Aufnahme der mobilen Handhabungsvonichtung (1) für Honigwaben nach einem der Ansprüche 1 bis 6, mit
- einer Zentraiwelle (42) mit einem Endstück (44) zur Aufnahme in einem Lager am Kesselboden der Schleuder und einer Kupplung zur Verbindung mit dem Antrieb der Honigschleuder,
- radialen oberen Armen (45), die mit der Zentralwelle (42) drehfest verbunden sind und jeweils Bohrungen (47) in ihrem radial außen liegenden Bereich zur Aufnahme des oberen Stiftes (13) der mobilen Handhabungsvorrichtung (1) aufweisen,
- radialen unteren Armen (46), die mit der Zentralwelle (42) drehfest verbunden sind und jeweils Bohrungen (48) in ihrem radial außenliegenden Bereich zur Aufnahme des unteren kurzen Stiftes (14) der mobilen Handhabungsvorrichtung aufweisen.

13. Einsatz nach Anspruch 12, **dadurch gekennzeichnet, dass** Anschläge (49) angeordnet sind, die eine begrenzte Schwenkbewegung der mobilen Handhabungsvorrichtung (1) in eine etwa tangential zur Drehrichtung der Schleuder gerichtete Position, sowohl in Drehrichtung als auch gegen die Drehrichtung des Einsatzes (41), ermöglichen.

14. Einsatz nach Anspruch 12 oder 13, **dadurch gekennzeichnet, dass** eine Verstelleinrichtung (50) angeordnet ist, durch die die mobilen Handhabungsvorrichtungen (1) gemeinsam in Drehrichtung oder gegen die Drehrichtung verschwenkt werden können.

15. Einsatz nach Anspruch 14, **dadurch gekennzeichnet, dass** die Verstelleinrichtung (50) die mobilen Handhabungsvorrichtungen (1) in der verschwenkten Stellung fixieren kann.

16. Einsatz nach einem der Ansprüche 12 bis 15, **dadurch gekennzeichnet, dass** der Abstand zwischen den die Bohrungen tragenden Abschnitten (47, 48) übereinander liegender Arme (45, 46) sowie die Länge der Stifte (13, 14) so ausgebildet sind, dass zur Festlegung der Handhabungsvorrichtung (1) im Gestell zuerst der obere, längere Stift (13) und danach der untere, kürzere Stift (14) in die jeweilige Bohrung eingefädelt werden können.

17. Einsatz nach einem der Ansprüche 12 bis 16, **dadurch gekennzeichnet, dass** der obere die Bohrung aufweisende Abschnitt (47) der Arme (45) zum Einfädeln des oberen Stifts federnd nachgiebig ausgebildet ist.

18. Einsatz nach einem der Ansprüche 12 bis 17, **dadurch gekennzeichnet, dass** der Einsatz (41) vier obere Arme (45) und vier untere Arme (46) aufweist.

19. Einsatz nach einem der Ansprüche 12 bis 18, **dadurch gekennzeichnet, dass** der Einsatz (41) sechs obere Arme (45) und sechs untere Arme (46) aufweist.

20. Einsatz (42) nach einem der Ansprüche 12-19 mit einer darin eingesetzten Handhabungsvorrichtung nach einem der Ansprüche 1 bis 6, mit einem an der Handhabungsvorrichtung befestigten L-förmigen Halteelement für bürsten- oder schwammartige Streifen zur Reinigung der Innenseite der Wand und des Bodens der Schleudertrommel.
